# EUROPÄISCHE PATENTSCHRIFT

(11) **EP 1 563 260 B1**
(45) Veröffentlichungstag und Bekanntmachung des Hinweises auf die Patenterteilung: **19.03.2014**
(21) Anmeldenummer: 03775375.3
(22) Anmeldetag: 20.11.2003
(51) Int. Cl.: G01F 23/296, G01D 11/24

(54) **GEHÄUSE MIT REDUZIERTER WÄRMELEITUNG FÜR EIN MESSGERÄT**
HOUSING WITH REDUCED THERMAL CONDUCTION FOR A MEASURING INSTRUMENT
BOITIER A CONDUCTION THERMIQUE REDUITE POUR APPAREIL DE MESURE

(30) Priorität: 23.11.2002 DE 10254720
(43) Veröffentlichungstag der Anmeldung: 17.08.2005
(60) Teilanmeldung: 12163268.1
(73) Patentinhaber: Endress + Hauser GmbH + Co. KG, 79689 Maulburg (DE)
(72) Erfinder: HINTNER, Gottfried, 79650 Schopfheim (DE); MÜLLER, Alexander, 79361 Sasbach-Jechtingen (DE); PFEIFFER, Helmut, 79585 Steinen (DE)
(74) Vertreter: Andres, Angelika Maria
(86) Internationale Anmeldenummer: PCT/EP2003/012982
(87) Internationale Veröffentlichungsnummer: WO 2004/048900

(56) Entgegenhaltungen:
- DE-A- 19 540 035
- DE-U- 8 216 323
- US-A- 4 405 160
- US-A- 4 575 705
- US-A- 5 851 083

## Beschreibung

Die Erfindung betrifft ein Messgerät mit einem Gehäuse, in dem elektronische Bauteile angeordnet sind.

Messgeräte werden in nahezu allen Industriezweigen zur Erfassung physikalischer Größen, z.B. von Füllständen oder Drücken, eingesetzt.

Messgeräte weisen üblicherweise eine Vorrichtung zur Erfassung der physikalischen Größe auf, die die physikalische Größe in eine elektrische Größe umwandelt und diese für eine Auswertung, Verarbeitung und/oder Anzeige zur Verfügung stellt. Hierzu sind je nach Messgerät mehr oder minder aufwendige elektronische Schaltungen im Messgerät vorgesehen, die elektronische Bauteile aufweisen.

Ein Beispiel für ein Messgerät sind Füllstandsgrenzschalter, die das Erreichen eines vorbestimmten Füllstandes detektieren und z.B. als Überfüllsicherung oder als Pumpenleerlaufschutz eingesetzt werden.

Heute sind z.B. Füllstandsgrenzschalter auf dem Markt, die ein topfförmiges Gehäuse aufweisen, dessen Boden eine Membran bildet. Die Membran wird im Betrieb durch mindestens ein im Inneren des Gehäuses angeordnetes piezoelektrisches Element in Schwingungen versetzt. Auf der Membran sind z.B. in den Behälter hineinragende Schwingstäbe angeformt, die im Betrieb Schwingungen parallel zu deren Längsachse ausführen. Das aus Membran und Schwingstäben aufgebaute Schwingungsgebilde wird vorzugsweise zu Resonanzschwingungen angeregt. Die Resonanzfrequenz des Schwingungsgebildes hängt davon ab, ob die Schwingstäbe vom Füllgut bedeckt sind oder nicht. Anhand der Resonanzfrequenz lässt sich feststellen ob die Schwingstäbe vom Füllgut bedeckt sind oder nicht. Sind die Schwingstäbe vom Füllgut bedeckt, so ist ein vorbestimmter Füllstand erreicht. Der vorbestimmte Füllstand ist durch eine Einbauhöhe des Füllstandsgrenzschalters im Behälter vorgegeben.

Messgeräte werden an einem Messort, z.B. auf einem Behälter, montiert. Dabei können am Messort unter Umständen relativ hohe Temperaturen auftreten. Temperaturen in geschlossenen Behältern erreichen in vielen Industriezweigen z.B. Temperaturen von bis zu 150°C. Außerdem können in der Umgebung des Messortes verhältnismäßig hohe Temperaturen, z.B. 50°C, auftreten. Elektronische Bauteile sind jedoch sehr temperaturempfindlich. In der Regel können handelsübliche elektronische Bauteile nur bei Temperaturen bis maximal 85°C eingesetzt werden.

Je nach Art der Anwendung und der Einbausituation am Behälter müssen die Gehäuse sehr robust ausgebildet sein. In vielen Anwendungen wird gefordert, dass das Gehäuse einer Last von maximal 1000 N quer zu einer Längsachse des Gehäuses standhalten muss, ohne dass es zu einem Bruch des Gehäuses kommt.

Metallische Gehäuse sind sehr robust und lassen sich außerdem gut reinigen. Entsprechend werden in der industriellen Messtechnik bevorzugt metallische Gehäuse für Messgeräte eingesetzt.

Metalle sind jedoch gute Wärmeleiter. Eine gute Wärmeleitung durch das Gehäuse bringt den Nachteil mit sich, dass in dem Gehäuse befindliche elektronische Bauteile eine sehr starke Erwärmung erfahren, wenn am Messort hohe Temperaturen vorherrschen.

Die Gebrauchsmusterschrift DE 8216323 U beschreibt ein Messgerät zur kapazitiven Füllstandsmessung in einem Behälter, mit einer Sonde zur Messwertaufnahme und einem die Elektronik beherbergenden Sondenkopf, welcher außerhalb des Behälters verbleibt. Um die Elektronik vor hohen Temperaturen zu schützen ist der Sondenkopf über einen Kühlkörper, welcher auf der Außenseite mit Kühlrippen versehen ist, mit der Sonde verbunden.

In der Offenlegungsschrift US-A 5851083 ist ein Mikrowellenfüllstandsmessgerät offenbart, bei welchem zwischen Antenne und Elektronikgehäuse ein Adapter angeordnet ist. Der Adapter weist eine umlaufende Einschnürung auf, welche die Querschnittsfläche und somit den Wärmefluss reduziert. Weiterhin sind Kühlrippen an dem Adapter angeformt.

In der Offenlegungsschrift US-A 4575705 ist eine Temperatursonde beschrieben, welche intern einen Wärmetauscher mit Rippen zur Wärmeabgabe aufweist.

Die Offenlegungsschrift DE 19540035 A1 beschreibt eine Sonde mit einem isolierenden Halsteil. Durch die Ausbildung eines Abschnittes des Halsteils aus einem Material mit geringer Wärmeleitfähigkeit wird eine verminderte Wärmeleitung erreicht.

Es ist eine Aufgabe der Erfindung ein alternativ ausgestaltetes Messgerät anzugeben, das auch bei hohen Temperaturen eingesetzt werden kann.

Hierzu besteht die Erfindung in einem Messgerät mit
- einem Gehäuse,
- das entlang einer Längsachse, einen ersten, zweiten und dritten Abschnitt aufweist, wobei
- an dem ersten Abschnitt eine Vorrichtung zur Befestigung des Gehäuses an einem Messort vorgesehen ist,
- der zweite Abschnitt an den ersten Abschnitt angrenzt, und
- der dritte Abschnitt an den zweiten Abschnitt angrenzt und sich im dritten Abschnitt elektronische Bauteile befinden,
- der zweite Abschnitt so ausgebildet ist, dass der zweite Abschnitt bei Vorliegen eines Temperaturunterschiedes zwischen einer Umgebung des ersten Abschnitts und einer Umgebung des dritten Abschnitts auf Grund einer Erwärmung des ersten Abschnitts einen Schutz des dritten Abschnitts vor Erwärmung bewirkt,
wobei die Wand des zweiten Abschnitts in einem Querschnitt senkrecht zur Längsachse des Gehäuses mehrere Bereiche mit reduzierter Wanddicke aufweist, wobei die Bereiche nebeneinander angeordnet sind und voneinander durch ringsegmentförmige Stege abgetrennt sind, wobei die Bereiche durch kreissegmentförmige Ausnehmungen gebildet sind.

Gemäß einer Weiterbildung ist im Inneren des Gehäuses im Bereich des zweiten Abschnitts zur Erhöhung einer mechanischen Festigkeit des Gehäuses gegenüber Belastungen senkrecht zur Längsachse des Gehäuses ein Stützkörper aus einem Isolator angeordnet.

Die Erfindung und weitere Vorteile werden nun anhand der Figuren der Zeichnung näher erläutert; gleiche Elemente sind in den Figuren mit gleichen Bezugszeichen versehen.
- Fig. 1: zeigt einen Schnitt durch ein Messgerät mit einer umlaufenden Nut;
- Fig. 2: zeigt einen Schnitt durch einen zweiten Abschnitt mit durch im Schnitt kreissegmentförmige Ausnehmungen gebildeten Bereichen mit geringerer Wandstärke;

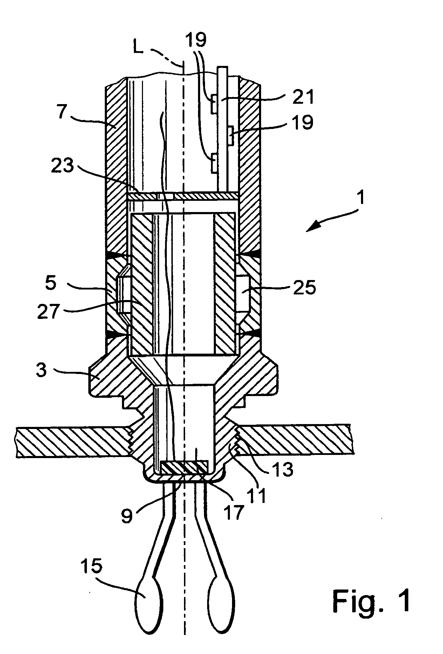

Fig. 1 zeigt einen Schnitt durch ein Messgerät.

Bei dem dargestellten Ausführungsbeispiel handelt es sich um einen Füllstandsgrenzschalter für die Feststellung und/oder Überwachung eines vorbestimmten Füllstands in einem Behälter, wie er in der Mess- und Regeltechnik eingesetzt wird.

Das Messgerät weist ein Gehäuse 1 aus einem Metall, z.B. einem Edelstahl, auf, das einen ersten, einen zweiten und einen dritten Abschnitt 3, 5, 7 umfasst.

Der erste Abschnitt 3 hat die Form eines von einer Membran 9 endseitig abgeschlossenen Zylinders.

An dem Zylinder ist eine Vorrichtung 11 zur Befestigung des Gehäuses 1 an einem Messort vorgesehen. In dem dargestellten Ausführungsbeispiel ist die Vorrichtung 11 ein Außengewinde, das an den ersten Abschnitt 3 angeformt ist. Das Gehäuse 1 ist mittels des Außengewindes in ein Gegengewinde am Messort eingeschraubt. In dem dargestellten Ausführungsbeispiel ist das Gehäuse 1 in eine Öffnung 13 eines Behälters eingeschraubt. Andere Vorrichtungen zur Befestigung, z.B. Befestigungsflansche, sind ebenfalls einsetzbar.

An der Membran 9 sind zwei voneinander beabstandete in den Behälter hineinragende Schwingstäbe 15 angeformt, die im Betrieb gegenphasige Schwingungen senkrecht zu deren Längsachse ausführen. Auf einer ins Innere des Gehäuses 1 weisenden Oberfläche der Membran 9 ist hierzu ein piezoelektrisches Element 17 angebracht, z.B. aufgeklebt, durch das die Membran 9 in Biegeschwingungen versetzbar ist.

Im Betrieb wird das aus Membran 9 und Schwingstäben 15 bestehende Schwingungsgebilde in Resonanzschwingungen versetzt und es wird dessen Resonanzfrequenz erfasst. Liegt die Resonanzfrequenz unterhalb eines vorgegebenen Schwellwertes, so sind die Schwingstäbe von einem Füllgut im Behälter bedeckt, liegt sie oberhalb dieses Schwellwerts, liegen die Schwingstäbe frei.

An einer membran-abgewandten Seite des ersten Abschnitts 3 grenzt der zweite Abschnitt 5 des Gehäuses 1 an. Der zweite Abschnitt 5 ist ebenfalls im wesentlichen zylindrisch.

Der zweite Abschnitt 5 ist so ausgebildet, dass bei vorliegen eines Temperaturunterschiedes zwischen einer Umgebung des ersten Abschnitt 3 und einer Umgebung des dritten Abschnitts 7 ein geringer Wärmestrom parallel zu einer Längsachse L des Gehäuses 1 durch den zweiten Abschnitt 5 fließt. Hierdurch wird eine Wärmeübertragung vom ersten in den dritten Abschnitt 3, 7 reduziert.

Der dritte Abschnitt 7 ist ebenfalls zylindrisch und grenzt an eine vom ersten Abschnitt 3 abgewandte Seite des zweiten Abschnitts 5 an. In dem dritten Abschnitt 7 befinden sich elektronische Bauteile 19. In dem dargestellten Ausführungsbeispiel sind die Bauteile 19 auf einer Leiterplatte 21 angeordnet, die mittels einer in Fig. 1 lediglich schematisch dargestellten Halterung 23 in dem dritten Abschnitt 7 befestigt ist.

Der zweite Abschnitt 5 bewirkt einen Schutz des dritten Abschnitts 7, bzw. der darin befindlichen Bauteile 19 vor Erwärmung. Indem der zweite Abschnitt 5 so ausgebildet ist, dass bei einem Temperaturunterschied zwischen der Umgebung des ersten Abschnitts 3 und der Umgebung des dritten Abschnitts 7 nur ein geringer Wärmestrom parallel zu einer Längsachse L des Gehäuses 1 durch den zweiten Abschnitt fließt, bewirkt eine Erwärmung des am Messort unter Umständen sehr hohen Temperaturen ausgesetzten ersten Abschnitts 3 eine deutlich niedrigere Erwärmung des dritten Abschnitts 7, bzw. der darin befindlichen elektronischen Bauteile 19, als bei herkömmlichen Messgeräten.

Ein geringerer Wärmestrom parallel zur Längsachse L ist physikalisch auf zwei verschiedenen Wegen erzielbar. Zum einen kann ein durch ein Temperaturgefälle zwischen dem ersten Abschnitt 3 und der Umgebung des dritten Abschnitts 7 bedingter Wärmemengenfluss reduziert werden, indem eine für diesen Wärmemengenfluss zur Verfügung stehende Querschnittsfläche reduziert wird. Zum anderen kann eine durch Konvektion vom zweiten Abschnitt 5 radial nach außen abgegebene Wärmemenge erhöht werden, indem eine hierfür zur Verfügung stehende Oberfläche erhöht wird. Die erste Möglichkeit ist nachfolgend anhand des Ausführungsbeispiels näher erläutert.

Die für den Wärmemengenfluss zur Verfügung stehende Querschnittsfläche wird maßgeblich reduziert, indem eine Wand des zweiten Abschnitts 5 mindestens einen Bereich mit reduzierter Wanddicke aufweist. Die Querschnittsfläche ist proportional zur Wanddicke.

Bei dem in Fig. 1 dargestellten Ausführungsbeispiel des zweiten Abschnitts gemäß dem Stand der Technik ist in der Wand des zweiten Abschnitts 5 auf deren Innenseite eine ringförmig umlaufende Nut 25 vorgesehen. Je geringer die Wandstärke im Bereich der Nut 25 ist und je breiter die Nut 25 ist, umso geringer ist eine im dritten Bereich 7 auf die elektronischen Bauteile 19 einwirkende Temperatur.

Eine reduzierte Wandstärke und eine breite Nut 25 führen dazu, dass das Gehäuse 1 an mechanischer Stabilität verliert. Besonders kritisch sind hierbei Belastungen, die senkrecht zur Längsachse L auf das Gehäuse 1 einwirken.

Vorzugsweise ist daher, wie in Fig. 1 dargestellt im Inneren des zweiten Abschnitt 5 zur Erhöhung der mechanischen Festigkeit des Gehäuses 1 gegenüber Belastungen senkrecht zur Längsachse des Gehäuses 1 ein Stützkörper 27 aus einem Isolator angeordnet. Der Stützkörper 27 ist ein Hohlrohr, dessen Außengeometrie einer Innengeometrie des zweiten Abschnitts 5 angepasst ist. Bei einem zylindrischen zweiten Abschnitt 5 bedeutet dies, dass ein Außendurchmesser des Stützkörpers 27 vorzugsweise gleich einem Innendurchmesser des zweiten Abschnitts 5 ist.

Er besteht aus einem Isolator, weil Isolatoren eine im Vergleich zu Metallen geringe Wärmeleitfähigkeit aufweisen. Der erste Abschnitt 3 weist einen geringeren Innendurchmesser auf als der zweite Abschnitt 5. Zwischen dem ersten und dem zweiten Abschnitt 3, 5 besteht somit eine Absatzfläche, auf der der Stützkörper 27 aufliegt.

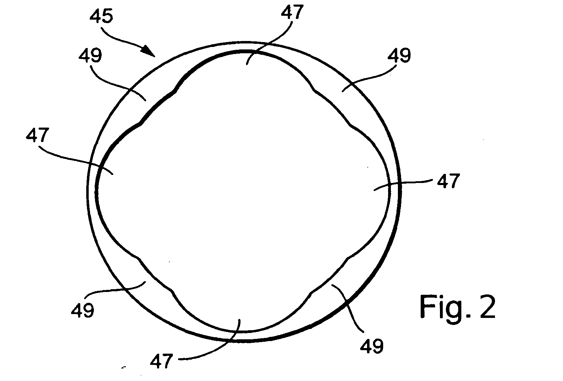

Fig. 2 zeigt einen Querschnitt eines Ausführungsbeispiels für einen zweiten Abschnitt 45. Dieser zweite Abschnitt 45 weist vier innenliegende Bereiche 47 mit reduzierter Wandstärke auf. Die Bereiche 47 sind nebeneinander angeordnet und durch ringsegmentförmige Stege 49 voneinander getrennt. Die Bereiche 47 selbst sind durch im Querschnitt kreissegmentförmige Ausnehmungen gebildet.

Der Wärmestrom parallel zur Längsachse L des Gehäuses 1 des zweiten Bereichs 5, 29, 35, 41, 45 wird durch eine geringe in dieser Richtung zur Verfügung stehende Querschnittsfläche erreicht.

Bei den erfindungsgemäßen Messgeräten können die zweiten Abschnitte 5, 45 eigenständige Bauteile sein, die z.B. wie in Fig. 1 dargestellt durch Schweißungen mit dem ersten und dem dritten Abschnitt 3, 7 verbunden sind. Alternativ können die zweiten Abschnitte 5, 45, zusammen mit dem ersten und/oder dem zweiten Abschnitt 3, 7 als ein einziges Bauteil ausgebildet sein.

Die Bereiche mit reduzierte Wandstärke können z.B. durch Drehen hergestellt werden.

Durch die zweiten Abschnitte 5, 45, wird erreicht, dass selbst dann, wenn der erste Abschnitt 1 am Messort sehr hohen Temperaturen, z.B. 150 °C, ausgesetzt ist, die elektronischen Bauteile 19 im dritten Abschnitt 7 vor einer Überhitzung geschützt sind. Ist der erste Abschnitt 1 einer Temperatur von 150 °C ausgesetzt, so genügt bereits eine Nut mit einer Breite von etwas mehr als einem Zentimeter, um zu gewährleisten, dass die elektronischen Bauteile 19 eine Temperatur von maximal 85°C erreichen. 85 °C wird von den meisten Bauteilherstellern als Temperaturobergrenze für den Einsatz von elektronischen Bauteilen angegeben.

Ein großer Vorteil der erfindungsgemäßen Messgeräte besteht darin, dass sie bei hohen Temperaturen einsetzbar ist und gleichzeitig hohen mechanischen Belastungen senkrecht zur Längsachse L des Gehäuses 1, z.B. Belastungen von 1000 N, standhalten können. Damit sind die Messgeräte sehr vielseitig einsetzbar

## Patentansprüche

1. Messgerät mit
- einem Gehäuse (1), das entlang einer Längsachse (L), einen ersten, zweiten und dritten Abschnitt (3; 5, 45; 7) aufweist, wobei
- an dem ersten Abschnitt (3) eine Vorrichtung (11) zur Befestigung des Gehäuses (1) an einem Messort vorgesehen ist,
- der zweite Abschnitt (5, 45) an den ersten Abschnitt (3) angrenzt, und
- der dritte Abschnitt (7) an den zweiten Abschnitt (5, 45) angrenzt und sich im dritten Abschnitt (7) elektronische Bauteile (19) befinden,
- der zweite Abschnitt (5, 45) so ausgebildet ist, dass der zweite Abschnitt (5, 45) bei Vorliegen eines Temperaturunterschiedes zwischen einer Umgebung des ersten Abschnitts (3) und einer Umgebung des dritten Abschnitts (7) auf Grund einer Erwärmung des ersten Abschnitts (3) einen Schutz des dritten Abschnitts (7) vor Erwärmung bewirkt,
**dadurch gekennzeichnet,**
**dass** die Wand des zweiten Abschnitts (5, 45) in einem Querschnitt senkrecht zur Längsachse (L) des Gehäuses (1) mehrere Bereiche (31, 37, 47) mit reduzierter Wanddicke aufweist, wobei die Bereiche (31, 37, 47) nebeneinander angeordnet sind und voneinander durch ringsegmentförmige Stege (33, 39, 49) abgetrennt sind, wobei die Bereiche (31, 37, 47) durch kreissegmentförmige Ausnehmungen gebildet sind.

2. Messgerät nach Anspruch 1,
bei dem im Inneren des Gehäuses (1) im Bereich des zweiten Abschnitts (5) zur Erhöhung einer mechanischen Festigkeit des Gehäuses (1) gegenüber Belastungen senkrecht zur Längsachse (L) des Gehäuses (1) ein Stützkörper (27) aus einem Isolator angeordnet ist.

## Claims

1. Measuring device with
- a housing (1), which has a first, second and third section (3 ; 5, 45 ; 7) along a longitudinal axis, wherein
- a unit (11) for securing the housing (1) at a measuring location is provided on the first section (3),
- the second section (5, 45) adjoins the first section (3), and
- the third section (7) adjoins the second section (5, 45), and electronic components (19) are located in the third section (7),
- the second section (5, 45) is designed in such a way that the second section (5, 45) ensures that the third section (7) is protected against heating when a difference in temperature occurs between an environment of the first section (3) and an environment of the third section (7) on account of heating of the first section (3),
**characterized in that**
in a cross-section perpendicular to the longitudinal axis (L) of the housing (1), the wall of the second section (5, 45) has several zones (31, 37, 47) with a reduced wall thickness, wherein the zones (31, 37, 47) are arranged beside one another and are separated from one another by ridges (33, 39, 49) with a ring segment shape, wherein the zones (31, 37, 47) are formed by cavities with a circle segment shape.

2. Measuring device as claimed in Claim 1,
wherein a support body (27) consisting of an isolator is located inside the housing (1) in the area of the second section (5), and is designed to increase a mechanical stability of the housing (1) vis-à-vis loads perpendicular to the longitudinal axis (L) of the housing (1).

## Revendications

1. Appareil de mesure avec
- un boîtier (1), qui comprend le long d'un premier axe longitudinal (L) une première et une deuxième et une troisième partie (3 ; 5, 45 ; 7), pour lequel
- est prévu, sur la première partie (3), un dispositif (11) destiné à la fixation du boîtier (1) sur un emplacement de mesure,
- la deuxième partie (5, 45) jouxte la première partie (3), et
- la troisième partie (7) jouxte la deuxième partie (5, 45) et la troisième partie (7) comporte des composants électroniques (19),
- la deuxième partie (5, 45) est conçue de telle sorte que la deuxième partie (5, 45), en présence d'une différence de température entre un environnement de la première partie (3) et un environnement de la troisième partie (7) en raison de l'échauffement de la première partie (3), assure une protection contre l'échauffement de la troisième partie (7), **caractérisé en ce**
**que** la paroi de la deuxième partie (5, 45) comporte dans une section perpendiculaire à l'axe longitudinal (L) du boîtier (1) plusieurs zones (31, 37, 47) présentant une épaisseur de paroi réduite, les zones (31, 37, 47) étant juxtaposées et séparées les unes des autres par des nervures (33, 39, 49) en forme de segment annulaire, les zones (31, 37, 47) étant formées par des cavités en forme de segment circulaire.

2. Appareil de mesure selon la revendication 1,
pour lequel est disposé, à l'intérieur du boîtier (1), dans la zone de la deuxième partie (5), un corps support (27) constitué d'un isolateur, destiné à l'augmentation de la résistance mécanique du boîtier (1) par rapport aux contraintes perpendiculaires à l'axe longitudinal (L) du boîtier (1).
